(19) Europäisches Patentamt
European Patent Office
Office européen des brevets

(11) **EP 1 667 878 B1**

(12) **EUROPÄISCHE PATENTSCHRIFT**

(45) Veröffentlichungstag und Bekanntmachung des Hinweises auf die Patenterteilung:
**23.05.2007 Patentblatt 2007/21**

(21) Anmeldenummer: **04786787.4**

(22) Anmeldetag: **16.09.2004**

(51) Int Cl.:
**B60R 21/01** (2006.01)

(86) Internationale Anmeldenummer:
**PCT/DE2004/002068**

(87) Internationale Veröffentlichungsnummer:
**WO 2005/030536 (07.04.2005 Gazette 2005/14)**

(54) **Verfahren zur Bildung einer Auslöseentscheidung**

Method for reaching a trigger decision

Procédé pour etablir une decision de déclenchement

(84) Benannte Vertragsstaaten:
**DE ES FR GB**

(30) Priorität: **25.09.2003 DE 10344613**

(43) Veröffentlichungstag der Anmeldung:
**14.06.2006 Patentblatt 2006/24**

(73) Patentinhaber: **ROBERT BOSCH GMBH**
**70442 Stuttgart (DE)**

(72) Erfinder:
• **LICH, Thomas**
**71409 Schwaikheim (DE)**

• **LAHMANN, Robert**
**90491 Nürnberg (DE)**
• **SCHMID, Michael**
**70806 Kornwestheim (DE)**
• **KROENINGER, Mario**
**77815 Buehl (DE)**

(56) Entgegenhaltungen:
**EP-A- 1 219 500**          **WO-A-99/47384**
**DE-A- 10 149 112**

## Beschreibung

Stand der Technik

Die Erfindung geht aus von einem Verfahren zur Bildung einer Auslöseentscheidung für ein Rückhaltesystem nach der Gattung des unabhängigen Patentanspruchs.

Aus DE 101 49 112 A1 geht bereits ein Verfahren zur Bildung einer Auslöseentscheidung für ein Rückhaltesystem, insbesondere für Soil Trips, hervor. Unter Soil Trips versteht man Situationen, in denen das Fahrzeug nach einem Schleudervorgang seitlich rutscht und dann auf einem Untergrund mit einem hohen Reibungskoeffizienten gerät, zum Beispiel ein unbefestigter Untergrund neben einer Fahrbahn. Rutscht das Fahrzeug dann beispielsweise nach rechts, so werden die Reifen auf der rechten Seite eine starke Verzögerung erfahren, die dann ein Drehmoment des Fahrzeugs auf dem unbefestigten Untergrund induziert. In DE 101 49 112 A1 wird die Auslöseentscheidung in Abhängigkeit von Fahrdynamikdaten bestimmt, wobei als die Fahrdynamikdaten ein Schwimmwinkel in Verbindung mit einer Fahrzeugquergeschwindigkeit und einer Fahrzeugkippbewegung verwendet werden. Durch entsprechende Schwellwertvergleiche wird die Auslöseentscheidung dann gebildet.

Aus WO 99/47384 A1 ist es bekannt, in Abhängigkeit von der Drehrate um die Fahrzeuglängsachse, einer Fahrzeuggeschwindigkeit und einer Fahrzeugquerbeschleunigung die Auslöseentscheidung bei einem Soil-Trip-Rollover zu bilden. Die Fahrzeugquerbeschleunigung wird dabei mit einem festem Schwellwert verglichen. Nur wenn dieser feste Schwellwert überschritten wird, kann es zu einer Auslöseentscheidung kommen.

Aus EP 1 213 500 A geht ein Verfahren nach dem Oberbegriff des unabhängigen Anspruchs hervor. Eine bessere Anpassung des Schwellwerts an das Unfallverhalten wird durch ein Verfahren mit den Merkmalens des unabhängigen Anspruchs erreicht.

Vorteile der Erfindung

Das erfindungsgemäße Verfahren zur Bildung einer Auslöseentscheidung für ein Rückhaltesystem mit den Merkmalen des unabhängigen Patentanspruchs hat demgegenüber den Vorteil, dass eine frühere Auslösung im Falle von Soil Trips ermöglicht wird. Dies hängt daran, dass nicht nur die Fahrzeugquerbeschleunigung mit der Drehrate verknüpft wird, sondern auch die Fahrzeugquerbeschleunigung zusätzlich mit einem Schwellwert verglichen wird, der in Abhängigkeit von der integrierten Drehrate und der integrierten Fahrzeugquerbeschleunigung eingestellt wird. Durch die Anpassung des Schwellwerts wird eine bessere Adaption an das Unfallverhalten erreicht. Die Anpassung kann laufend oder in längeren Zeitabständen erfolgen. Diese Schwellwertentscheidung ist dahingehend zu verstehen, dass ein Wertepaar aus Fahrzeugquerbeschleunigung und vorzugsweise der Fahrzeugquergeschwindigkeit mit einer Kennlinie verglichen werden.

Untersuchungen von Soil Trip-Fahrzeugstests haben gezeigt, dass die Fahrzeugquergeschwindigkeit einen entscheidenden Einfluss auf die maximal erreichten Rollwinkel und somit auf das Überrollverhalten eines Fahrzeugs hat. Es ist in jedem Fall von Vorteil, für die Bildung einer Auslöseentscheidung die Signale eines Drehratensensors für Drehungen um die Längsachse des Fahrzeugs zu erfassen und mit denen eines Beschleunigungssensors in Fahrzeugquerrichtung zu verknüpfen. Dies führt zu einer höheren Sicherheit bei einer früheren Auslösemöglichkeit. Die Fahrzeugquerbeschleunigung eignet sich, da, wie oben dargestellt, bei einem Soil Trip an den Reifen eine laterale Abbremsung erfolgt und den Überrollvorgang initiiert.

Es ist weiterhin möglich, sowohl die Fahrzeugquergeschwindigkeit, als auch die Fahrzeugquerbeschleunigung, als auch die Drehrate um die Fahrzeuglängsachse zu verwenden, um damit ein hohes Maß an Sicherheit für die Auslöseentscheidung bei einer gleichzeitig sehr frühen Auslöseentscheidung zu ermöglichen.

Durch die in den abhängigen Ansprüchen aufgeführten Maßnahmen und Weiterbildungen sind vorteilhafte Verbesserungen des im unabhängigen Patentanspruch angegebenen Verfahrens zur Bildung einer Auslöseentscheidung für ein Rückhaltesystem möglich.

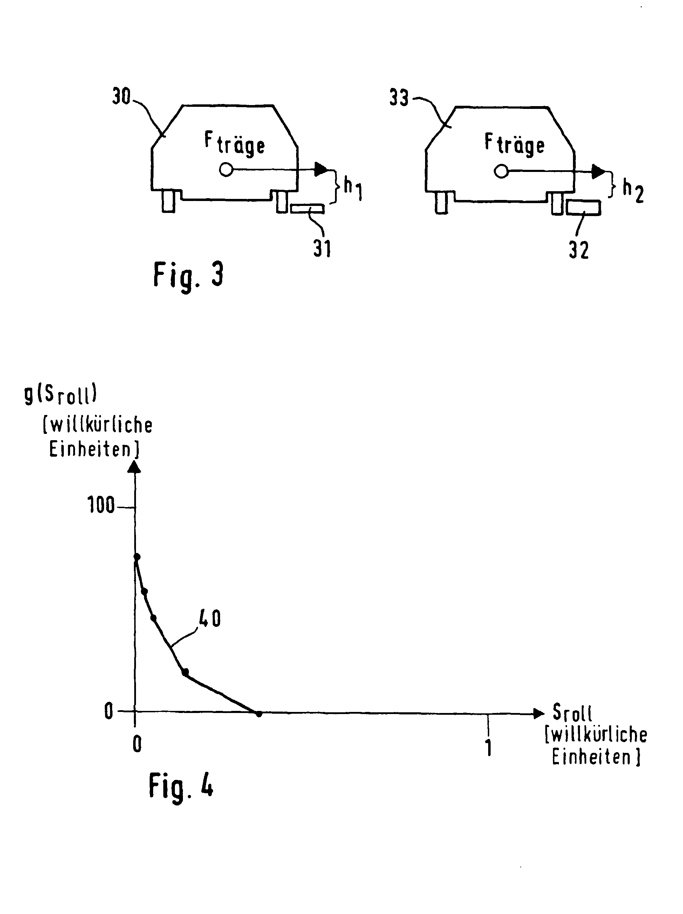

Besonders vorteilhaft ist, dass der Schwellwert für die Fahrzeugquerbeschleunigung in Abhängigkeit von einem Quotienten der integrierten Drehrate und der integrierten Fahrzeugbeschleunigung gebildet wird. Dieser Quotient wird Überrollempfindlichkeit des Fahrzeugs (roll-susceptibility) genannt. Die Erfindung macht sich folgende Erkenntnis zunutze: wird ein sich aufgrund seiner Trägheit bewegender Körper durch eine extern einwirkende Kraft abgebremst, dann nimmt die träge Masse des Fahrzeugs eine Trägheitskraft wahr. Diese Trägheitskraft kann in der vereinfachten Annahme eines starren Körpers durch einen an den Fahrzeugschwerpunkt ansetzenden Kraftvektor repräsentiert werden. Dies ist in Figur 3 dargestellt. Ein Fahrzeug 30 weist die Trägheitskraft $F_{träge}$ auf, deren Vektor nach rechts zeigt. Rechts vom Fahrzeugreifen ist ebenfalls ein Hindernis 31 zu erkennen, wobei zwischen dem Schwerpunkt an dem die Trägheitskraft $F_{träge}$ angreift und dem Hindernis 31 die Höhe H1 besteht.

Es gilt dann, je höher der Drehpunkt also beispielsweise die Oberkante eines Bordsteins liegt, das ist hier das Hindernis 31, desto niedriger ist bei gleichbleibender Kraft das aufgrund der Trägheitskraft induzierte Drehmoment. Im zweiten Beispiel in Figur 3 weist wiederum das Fahrzeug 33 eine Trägheitskraft $F_{träge}$ auf, die nach rechts zeigt aber nunmehr ist die Höhe H2 geringer, da das Hindernis 32 höher ist. Folglich ist auch das Drehmoment niedriger. Im Ergebnis heißt das, je höher der Drehpunkt desto größer muss die Trägheitskraft also auch die im Fahrzeug gemessene Verzögerung, da man von einer gleichbleibenden Masse des Fahrzeugs ausgehen kann, sein, um das Fahrzeug zum Überschlag zu bringen. Wenn der Drehpunkt auf Höhe des Schwerpunkts oder darüber liegt, kann das Fahrzeug gar nicht zum Überschlag gebracht werden. Die Beschleunigungssensoren im Fahrzeug messen eine Beschleunigung aus, der sich auf die Größe und die Richtung der einwirkenden Kraft schließen lässt, nicht aber auf den Ansatzpunkt der Kraft. Um ein Maß für die Auswirkung der lateral einwirkenden Kraft auf das Überrollverhalten des Fahrzeugs zu erhalten, wird die Überrollempfindlichkeit des Fahrzeugs $S_{roll}$ wie folgt berechnet:

$$ s_{roll} = \Delta\varphi_x / \Delta v_y = \int_{T_o}^{t\_end} \omega_x \, dt \left/ \int_{T_o}^{t\_end} a_y \, dt \right. . \qquad (1) $$

Hierbei ist der Start- und Endpunkt durch eine geeignete Applikation zu bilden. Eine mögliche Realisierung besteht darin, den Startzeitpunkt $T_0$ als den Zeitpunkt zu definieren, zu dem die Beschleunigung eine vorgegebene Schwelle überschritten hat und den Endzeitpunkt Tn dann zu setzen, wenn das Integral über ay einen vorgegebenen Wert erreicht.

Es ist möglich, dass im Nenner der Gleichung (1) das Integral über ay von der Quergeschwindigkeit, die zu Anfang des Soil Trips aufgrund des Schleuderns gilt, abgezogen wird. Damit ist dann im Nenner ein Ausdruck dafür gegeben, wieviel Geschwindigkeit in Querrichtung aktuell vorliegt, wobei der Geschwindigkeitsabbau aufgrund des Aufpralls durch das Integral über ay berücksichtigt wird. Damit ist dann auch leicht die kinetische Energie in Fahrzeugquerrichtung berechenbar. Unter Seitenaufprall wird hier ein Aufprall zur Seite beispielsweise auf einen Bordstein oder auch ein Aufprall zur Seite durch ein Eingraben der Räder in einen unbefestigten Untergrund verstanden.

Die Berechnung von $S_{roll}$ kann weiterhin dahingehend verfeinert werden, dass das Integral nur dann gebildet wird, wenn eine zusätzliche Bedingung erfüllt ist, beispielsweise wenn die Beschleunigung einen Minimalwert überschreitet. Die Bildung von $S_{roll}$ wird dann wie folgt abgewandelt:

$$ s_{roll} = \Delta\varphi_x / \Delta v_y = \int_{T_o}^{t\_end} (f_{weight} \times \omega_x) \, dt \left/ \int_{T_o}^{t\_end} (f_{weight} \times a_y) \, dt \right. , \qquad (2) $$

Wobei die Wichtungsfunktion $f_{weight} = 0$ ist, wenn die zusätzliche Bedingung beispielsweise Betrag von ay > einer Schwelle nicht erfüllt ist und $f_{weight} = 1$ in allen anderen Fällen. Zu jedem Zeitpunkt während eines Überrollvorgangs wird also die Überrollempfindlichkeit bestimmt und die zu diesem Zeitpunkt gültige Schwelle einer Basiskennlinie entsprechende gültigen Rechenvorschriften modifiziert.

Aus der Überrollempfindlichkeit wird dann eine Größe $g(S_{roll})$ hergeleitet, die die Schwelle an ay, die gemäß einem Verfahren gebildet wird, auf geeignete Weise variiert. Eine Möglichkeit zur Herleitung der Größe $g(S_{roll})$ ist durch eine analytische Formel oder eine weitere Kennlinie (look-up-table), über die jeden Wert von $S_{roll}$ eine Größe $g(S_{roll})$ zugeordnet wird, gegeben. Der Effekt von $g(S_{roll})$ kann beispielsweise sein, dass eine bestehende Schwelle an ay um $g(S_{roll})$ erhöht wird, also

$$ \text{Schwelle (neu)} = \text{Schwelle (alt)} + g(S_{roll}), $$

oder mit $g(S_{roll})$ multipliziert wird, also

$$ \text{Schwelle (neu)} = \text{Schwelle (alt)} * g(S_{roll}). $$

Ein Beispiel für die Modifizierung einer Schwelle durch g ($S_{roll}$) wird in Figur 4 gegeben.

Weiterhin ist es vorteilhaft, dass auf die Drehrate mit einem Schwellwert verglichen wird, der ebenfalls in Abhängigkeit von der integrierten Drehrate und der integrierten Fahrzeugquerbeschleunigung eingestellt wird. Auch hier ist es möglich, dass die Überrollempfindlichkeit zur Einstellung des Schwellwerts für die Drehrate wie oben beschrieben verwendet wird. Der Drehrate wird dann auch eine Basiskennlinie für den Schwellwert verwendet, die in Abhängigkeit von der Überrollempfindlichkeit modifiziert wird.

Zeichnung

Ausführungsbeispiele der Erfindung sind der Zeichnung dargestellt und werden in der nachfolgenden Beschreibung näher erläutert.

Es zeigen

Figur 1 ein Blockschaltbild einer Vorrichtung auf der das erfindungsgemäße Verfahren durchgeführt wird,
Figur 2 ein Blockschaltbild des erfindungsgemäßen Verfahrens,
Figur 3 den Effekt von verschieden hohen seitlich angeordneten Hindernissen und
Figur 4 das Verhältnis zwischen der Überrollempfindlichkeit und den Modifikationswert für die Schwellen.

Beschreibung

Moderne Systeme zur Sensierung von Überrollereignissen arbeiten mit mikromechanischen Drehratensensoren, die über eine numerische Integration auch die Berechnung des Drehwinkels ermöglichen. Die Kombination von Drehraten- und Drehwinkelinformation erlaubt eine Vorhersage des Überrollens und somit eine Auslöseentscheidung, die robuster und flexibler ist, als eine Auslösung über eine feste Winkelschwelle eines Neigungssensors. Auf Drehratensensoren beruhende Überroll-Sensierungssysteme erlauben somit auch die Auslösung irreversibler Rückhaltemittel wie pyrotechnischer Gurtstraffer und Windowbags zusätzlich zu der ursprünglichen Anwendungen der Überrollsensierung, dem Auslösen eines reversiblen Überrollbügels im Cabriolet. Ein klassischer Überrollvorgang wird dadurch induziert, dass dem Fahrzeug während der Geradeausfahrt durch die Beschaffenheit der Umgebung eine Bewegung in z-Richtung, also in Vertikalrichtung, aufgezwungen wird, die zu einer Drehung des Fahrzeugs führt. Typische Beispiele für solche Situationen sind abschüssige Böschungen neben der Fahrbahn sowie Rampen, die in der Praxis durch seitliche Leitplanken gegeben sind. Bei solchen Manövern sind die auftretenden lateralen Beschleunigungen relativ niedrig und die Insassen geraten erst spät, wenn überhaupt, in eine sogenannte "Out-Of-Position"-Situation, so dass die Auslösung der Insassenschutzsysteme erst zu einem relativ späten Zeitpunkt notwendig ist. Hierbei bedeutet "Out-Of-Position"-Situation, dass sich ein Insasse nicht in der Sitzposition befindet, in der er durch Rückhaltemittel optimal geschützt werden kann.

Anders sieht es aber bei den sogenannten Soil Trip-Überschlägen aus. Diese sind Situationen, in denen das Fahrzeug nach einem Schleudervorgang seitlich wegrutscht und dann auf einen Untergrund mit einem hohen Reibungskoeffizienten gerät, ein unbefestigter Untergrund neben einer Fahrbahn. Rutscht das Fahrzeug nach rechts, so werden die Reifen auf der rechten Seite eine starke Verzögerung erfahren, die dann einen Drehimpuls des Fahrzeugs verursacht. Der entscheidende Unterschied zu den zuvor beschriebenen Überroll-Vorgängen ist, dass die Insassen auf Grund der hohen lateralen Verzögerung des Fahrzeugs sehr früh "Out-Of-Position" geraten werden. Es ist also notwendig, die Insassen zu einem sehr frühen Zeitpunkt durch Aktivierung der geeigneten Schutzeinrichtungen, zum Beispiel Windowbags, vor Verletzungen durch einen Aufprall an die B-Säule oder die Fensterscheibe zu schützen. Eine derartig frühe Auslösung ist mit derzeitigen Systemen nicht möglich, ohne Gefahr zu laufen, in vielen Nicht-Auslösefällen unbeabsichtigt die Rückhaltemittel zu zünden. Die vorliegende Erfindung stellt ein Verfahren vor, um im Falle von Soil Trips einen früheren Auslösezeitpunkt zu ermöglichen.

Um eine solche frühe Auslösung im Falle von Soil Trips zu ermöglichen, verwendet die vorliegende Erfindung zusätzlich zu den Größen Drehrate und Beschleunigung in y- und z-Richtung, eine auf geeignete Weise bestimmte Fahrzeuggeschwindigkeit in y-Richtung, also die Fahrzeugquergeschwindigkeit.

Erfindungsgemäß wird die Auslöseentscheidung derart gebildet, dass zusätzlich zur Verknüpfung der Drehrate und der Fahrzeugquerbeschleunigung die Fahrzeugquerbeschleunigung einer Schwellwertentscheidung unterworfen wird, wobei der Schwellwert in Abhängigkeit von der integrierten Drehrate und der integrierten Fahrzeugquerbeschleunigung eingestellt wird. Dafür wird vorzugsweise die Fahrzeugquergeschwindigkeit verwendet.

Die in geeigneter Weise gefilterte Beschleunigung in Fahrzeugquerrichtung $a_y$ eignet sich besonders für die Schwellwertentscheidung, da eine am Reifen ansetzende laterale Beschleunigung den Überrollvorgang einleitet. Wie anhand von Fahrzeugversuchen bestätigt wurde, muss bei abnehmender Fahrzeugquergeschwindigkeit $v_y$ die Querbeschleunigung $a_y$ zunehmen, um ein Fahrzeug zum Überrollen zu bringen. Der Zusammenhang ist dabei normalerweise nicht linear und wird durch die Schwellentscheidung berücksichtigt. Die kritische Querbeschleunigung, d.h. die Querbeschleunigung, die zu einem Überschlag führt, zeigt als Funktion der Fahrzeugquergeschwindigkeit vielmehr einen umso größeren Gradienten, je näher sich die Fahrzeugquergeschwindigkeit der sogenannten "critical sliding velocity (CSV)" von höheren Geschwindigkeiten her nähert. Die CSV ist definiert als die Quergeschwindigkeit des Fahrzeugs, unterhalb derer ein Überschlagen des Fahrzeugs auf Grund grundlegender physikalischer Prinzipien, also der Energiebilanz, unmöglich ist. Die genaue Form der Kennlinie hängt vom Fahrzeugtyp und den Anforderungen an das System ab. Es wird in den folgenden Beispielen aber immer davon ausgegangen, dass die Kennlinie, also der Absolutwert der kritischen Querbeschleunigung als Funktion der Fahrzeugquergeschwindigkeit, für abnehmende Werte von $v_y$ monoton zunimmt.

Neben $a_y$ eignet sich auch die in geeigneter Weise gefilterte Drehrate um die Fahrzeuglängsachse $\omega_x$ für die Schwellwertentscheidung, die hier als Verknüpfung verwendet wird. Zwar ist die Verwendung von $\omega_x$ weniger intuitiv, da es eine laterale Verzögerung ist, die den Soil Trip-Vorgang einleitet. Untersuchungen entsprechender Fahrzeugversuche haben jedoch ergeben, dass sowohl $\omega_x$ als auch $a_y$ bei geeigneter Filterung als Größen für eine Auslöseschwelle geeignet sind.

Geht man zunächst von einer zeitkontinuierlichen nahezu exakten Bestimmung der Fahrzeugquergeschwindigkeit $v_y$ aus, so werden nach dem Erfüllen einer Startbedingung für den Algorithmus die sensierten Werte für $a_y$, $\omega_x$ und $v_y$ kontinuierlich, also in jeder Schleife des Algorithmus mit den in Form einer Kennlinie gespeicherten kritischen Werten verglichen. Liegt das Wertepaar Wert ($a_y$, $v_y$) zu einem Zeitpunkt t über dem kritischen Wert der Kennlinie, so ist die Hauptauslösebedingung erfüllt. Zusätzlich muss sichergestellt werden, dass die laterale Beschleunigung auch tatsächlich eine Drehung induziert. Das wird weiter unten besprochen. Neben $a_y$ kann auch $\omega_x$ mit einem in Abhängigkeit von $v_y$ eingestellten Schwellwert verglichen werden oder der $v_y$-abhängige Schwellwert kann als Funktion von $\omega_x$ verändert werden.

Es wird im Folgenden immer davon ausgegangen, dass $a_y$ negativ, also eine Verzögerung, ist, und $v_y$ sowie die Drehrate $\omega_x$ positiv ist. Geht man davon aus, dass $a_y$ von einem Sensor im Airbagsteuergerät bestimmt wird, so wird sich das Vorzeichen danach richten, ob der Soil Trip durch seitliches Rutschen nach links oder rechts zustande kommt. Desgleichen ist das Vorzeichen von $v_y$ abhängig von der Konvention, die bei der Bestimmung von $v_y$ verwendet wird. Bei der Umsetzung im Mikrokontroller, also im Prozessor im Airbagsteuergerät, bietet sich das folgende Verfahren an:

Von allen Größen $v_y$, $a_y$ und $\omega_x$ werden die Beträge gebildet. Zusätzlich wird durch einen Vorzeichencheck gewährleistet, dass $v_y$, $a_y$ und $\omega_x$ als Bedingung für einen Überrollvorgang in die selbe Richtung zeigen.

Die laterale Beschleunigung, die zu einem Kippen des Fahrzeugs führt, ist im wesentlichen bestimmt von der Schwerpunktslage und der Spurbreite eines Fahrzeugs und wird rechnerisch erfasst mit dem static stability factor (SSF). Typische Werte liegen für PKW's und SUV's (Sports Utility Vehicle) im Bereich von ca. SSF = 1,0 bis 1,7. Die SSF entspricht der lateralen Beschleunigung in Einheiten von g, die zum Umkippen des Fahrzeugs notwendig ist. Eine Kennlinie für $|a_y|$ zu $v_y$ wird also als niedrigste Auslöseschwelle immer einen Wert haben, der für das entsprechende Fahrzeug oberhalb des SSF-Wertes in g liegt. Abhängig von dem Untergrund ist es aber auch möglich, dass sich an allen Reifen eine hohe Beschleunigung aufbaut, also nicht nur an den rechten bzw. linken Reifen bei seitlichem Rutschen nach rechts bzw. links, so dass das Fahrzeug zwar seitlich rutscht, aber kein ausreichend großes Drehmoment induziert wird, um das Fahrzeug zum Kippen zu bringen. Verlässt man sich für die Auslöseentscheidung ausschließlich auf das Überschreiten eines Schwellwerts für $|a_y|$ als Funktion von $v_y$, so kann dies im ungünstigsten Fall zu einer Auslösung bei starker Fahrzeugquerbeschleunigung ohne signifikanten Aufbau eines Kippwinkels führen. Um Auslösungen in solchen Fällen zu unterdrücken, ist es vorteilhaft, eine zusätzliche Auslösebedingung an das Drehratensignal zu knüpfen. Als mögliche Realisierung der zusätzlichen Berücksichtigung des Drehratensignals bieten sich die folgenden Verfahren an:

a) als zusätzliche Auslösebedingung muss eine Schwelle an die auf geeignete Weise gefilterte Drehrate überschritten werden.
b) als zusätzliche Auslösebedingung muss eine Schwelle an die integrierte Drehrate, also den aufgebauten Winkel überschritten werden, wobei es vorteilhaft ist, den Start der Integration an das Überschreiten eines Schwellwertes an die Drehrate zu knüpfen.
c) des weiteren kann der Start einer Integration einer Drehrate an das Überschreiten eines Schwellwerts der Fahrzeugquerbeschleunigung geknüpft werden. In diesem Fall wird die Drehrate nur dann integriert, wenn die auf geeignete Weise gefilterte Fahrzeugquerbeschleunigung oberhalb eines definierten Wertes liegt. Als zusätzliche Auslösebedingung wird dann gefordert, dass das resultierende Integral, das die Dimension eines Winkels hat, einen Schwellwert überschreiten muss.

Die soeben geschilderten Aufgaben ergeben sich nicht, wenn man eine Auslöseschwelle für $\omega_x$ als Funktion

von $v_y$ betrachtet. Allerdings können sich auch bei nicht Soil-Triprelevanten Fahrmanövern, zum Beispiel bei engen und schnellen Kurvenfahrten, unter Umständen sehr hohe Drehraten aufbauen, die dann möglicherweise zu Fehlauslösungen führen könnten. Es ist also vorteilhaft, in diesem Fall zusätzlich eine auf dem Sensorsignal der Fahrzeugquerbeschleunigung beruhende Schwelle einzuführen. Analog zu den zuvor geschilderten zusätzlichen Auslösebedingungen auf Basis des Drehratensignals seien die folgenden Beispiele einer Umsetzung beschrieben:

a) als zusätzliche Auslösebedingung muss eine Schwelle an die auf geeignete Weise gefilterte Fahrzeugquerbeschleunigung überschritten werden.

b) als zusätzliche Auslösebedingung muss eine Schwelle an die integrierte Fahrzeugquerbeschleunigung, also den Geschwindigkeitsabbau, überschritten werden, wobei es vorteilhaft ist, den Start einer Integration an das Überschreiten eines Schwellwerts an die Fahrzeugquerbeschleunigung zu knüpfen.

c) des weiteren kann eine Integration der Fahrzeugquerbeschleunigung an das Überschreiten eines Schwellwerts der Drehrate geknüpft werden: in diesem Fall wird die Fahrzeugquerbeschleunigung nur dann integriert, wenn die auf geeignete Weise gefilterte Drehrate oberhalb eines definierten Wertes liegt. Als zusätzliche Auslösebedingung wird dann gefordert, dass das resultierende Integral, das die Dimension einer Geschwindigkeit hat, einen Schwellwert überschreiten muss.

Es ist also in jedem Fall ein Vorteil, für eine Auslöseentscheidung die Signale eines Drehratensensors und eines Beschleunigungssensors zu verknüpfen. Es wurden bis jetzt Verfahren beschrieben, in denen eine Hauptauslöseentscheidung auf Grund einer Kennlinie für $a_y$ und $\omega_x$ getroffen wurde und dann eine zusätzliche schwächere Auslösebedingung Plausibilisierung auf dem Verhalten von $\omega_x$ bzw. $a_y$ basiert. Natürlich ist auch eine gleichberechtigte Auslöseentscheidung von $a_y$ und $\omega_x$ möglich, d.h., dass sowohl für $a_y$, als auch für $\omega_x$ Kennlinien definiert werden, deren Auslöseentscheidung auf geeignete Weise verknüpft werden, beispielsweise durch ein einfaches logisches UND. Zusätzlich können ay und $\omega_x$ auf geeignete Weise bearbeitet (z.B. Filtern und Integrieren) und verknüpft werden.

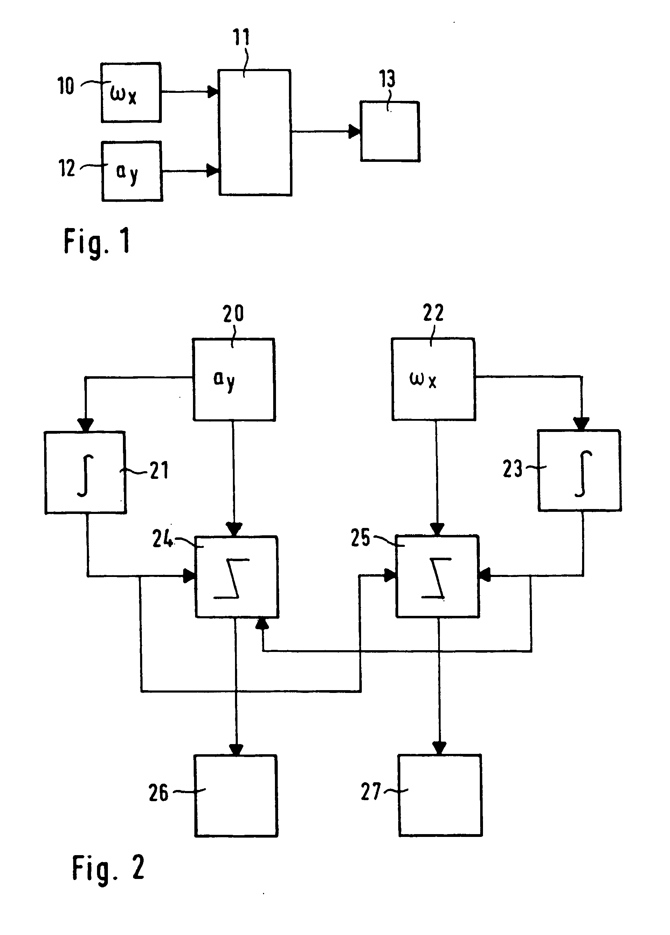

Figur 1 erläutert in einem Blockschaltbild die erfindungsgemäße Vorrichtung. Der Einfachheit halber sind hier nur die Komponenten dargestellt, die am erfindungsgemäßen Verfahren teilnehmen, es ist jedoch möglich, dass weit mehr Komponenten zur gesamten Vorrichtung gehören. Ein Drehratensensor 10 zur Erfassung der Drehrate um die Fahrzeuglängsachse $\omega_x$ ist an einen ersten Eingang eines Prozessors 11 angeschlossen. An einen zweiten Eingang eines Prozessors 11 ist ein Beschleunigungssensor 12 angeschlossen, der Beschleunigungen in Fahrzeugquerrichtung erfasst. An einen Ausgang des Prozessors 11 sind Rückhaltemittel 13, wie Airbags, Gurtstraffer und Überrollbügel angeschlossen. Die Komponenten 10, 11 und 12 können sich in einem gemeinsamen Steuergerät befinden. Es ist jedoch möglich, dass die Sensoren 10 und 12 außerhalb des Steuergeräts angeordnet sind, in dem sich der Prozessor 11 befindet, der beispielsweise ein Mikrocontroller sein kann, wobei die Sensoren beispielsweise in einer kinematischen Sensorplattform angeordnet sind. Die Sensoren 10 und 12 können an Analogeingänge des Mikrocontrollers 11 angeschlossen sein. Die Analogdigitalwandlung erfolgt dann im Mikrocontroller 11. Es ist jedoch möglich, dass es sich bei den Sensoren 10 und 12 jeweils um digitale Sensoren handelt, die bereits digitale Signale ausgeben. Konsequenterweise werden dann Digitaleingänge des Controllers 11 verwendet, um die Sensorsignale des Drehratensensors 10 und des Beschleunigungssensors 12 zu erfassen.

Der Mikrocontroller 11 verwendet die Größen $\omega_x$ und ay, um eine Auslöseentscheidung bezüglich eines Überrollvorgangs zu treffen. Die meisten Überrollvorgänge erfolgen um die Fahrzeuglängsachse. Die Auslöseentscheidung wird dabei in Abhängigkeit von Schwellwertentscheidungen getroffen, die die Fahrzeugquerbeschleunigung ay und gegebenenfalls die Drehrate $\omega_x$ betreffen. Dieser Schwellwert wird hier variiert, um den verschiedenen Gegebenheiten, die unterschiedlichen Hindernissen, die zu unterschiedlich hohen Drehpunkten führen Rechnung zu tragen. Der Schwellwert für ay wird in Abhängigkeit von einem Quotienten aus der integrierten Drehrate $\omega_x$ und den integrierten Fahrzeugquerbeschleunigung ay gebildet. Mit diesem Schwellwert wird dann ay verglichen. Liegt es darüber, wird die Auslöseentscheidung gebildet, liegt es darunter, wird die Auslöseentscheidung unterdrückt.

Figur 2 erläutert in einem Blockdiagramm den Ablauf des erfindungsgemäßen Verfahrens. In Block 20 wird durch den Beschleunigungssensor 12 die Fahrzeugquerbeschleunigung ay erfasst. Die Fahrzeugquerbeschleunigung ay wird einerseits in Block 21 integriert und andererseits in Block 24 mit einem Schwellwert verglichen, der in Abhängigkeit von der integrierten Fahrzeugquerbeschleunigung und der integrierten Drehrate aus dem Block 23 bestimmt wird. Das Ergebnis des Schwellwertvergleiches wird in Block 26 erfasst, um daraus dann die Auslöseentscheidung zu bilden. Die Drehrate $\omega_x$ wird in Block 22 durch den Sensor 10 erfasst. Auch diese wird einerseits wie oben dargestellt in Block 23 integriert und andererseits in Block 25 ebenfalls ein Schwellwertvergleich unterzogen, wobei auch dieser Schwellwert in Abhängigkeit von der integrierten Drehrate und der integrierten Fahrzeugquerbeschleunigung gebildet wird. Die Bildung erfolgt wie dargestellt durch Quotientenbildung, so dass die sogenannte Überrollempfindlichkeit den Schwellwert jeweils einstellt. Das Ergebnis des Schwellwertvergleichs der Drehrate $\omega_x$ mit ihrem Schwellwert in Block 25 wird in Block 27 erfasst und steht zur weiteren Verarbeitung zur Verfügung.

Figur 3 zeigt zwei typische Situationen. Links ist das Fahrzeug 30 einer Trägheitskraft Fträge nach rechts unterworfen. Die Trägheitskraft greift am Fahrzeugschwerpunkt an. Daher ist der Pfeil dem Trägheitskraft repräsentiert dort eingezeichnet. Das Fahrzeug 30 bewegt sich also nach rechts gegen das Hindernis 31. Durch das Hindernis 31 wird daher ein Drehmoment induziert, das sich aus dem Produkt Fträge * H ergibt. Hierbei ist H der vertikale Abstand zwischen der Oberkante des Hindernisses (Drehpunkt) und das Schwerpunkt des Fahrzeugs. Beim Vergleich der linken und rechten Zeichnung in Figur 3 gilt H1 > H2, so dass im rechten Fall eine größere Kraft bzw. Verzögerung auf das Fahrzeug wirken muss, um das selbe Moment zu erzeugen, wenn das Fahrzeug zu kippen beginnt.

In Figur 2 ist auf der Abszisse die Überrollempfindlichkeit Sroll in willkürlichen Einheiten aufgetragen. Auf der Ordinate ist der Modifikationsfaktor g(Sroll) ebenfalls in willkürlichen Einheiten aufgetragen. Eine Kurve 40 beschreibt deren Zusammenhang. Es handelt sich hier um einen empirischen Zusammenhang. Die Kurve 40 kann alternativ auch linear oder exponentiell sein.

## Patentansprüche

1.  Verfahren zur Bildung einer Auslösentscheidung, wobei die Auslöseentscheidung in Abhängigkeiten von Fahrdynamikdaten (ay, $\omega_x$) gebildet wird, wobei als die Fahrdynamikdaten zumindest eine Fahrzeugquerbeschleunigung (ay) und eine Drehrate ($\omega_x$) um die Fahrzeuglängsachse miteinander verknüpft werden, um die Auslöseentscheidung zu bilden, **dadurch gekennzeichnet, dass** die Fahrzeugquerbeschleunigung (ay) zusätzlich einer Schwellwertentscheidung zur Bildung der Auslöseentscheidung unterzogen wird, wobei der erste Schwellwert wenigstens in Abhängigkeit von einer integrierten Fahrzeugquerbeschleunigung (ay) und einer integrierten Drehrate ($\omega_x$) eingestellt wird.

2.  Verfahren nach Anspruch 1, **dadurch gekennzeichnet, dass** der erste Schwellwert in Abhängigkeit von einem Verhältnis der integrierten Drehrate ($\omega_x$) und der integrierten Fahrzeugquerbeschleunigung (ay) eingestellt wird.

3.  Verfahren nach Anspruch 1 oder 2, **dadurch gekennzeichnet, dass** die Integrationen in Abhängigkeit von der Fahrzeugquerbeschleunigung (ay) beginnt und die Integrationen enden in Abhängigkeit von einem Integralwert der Fahrzeugquerbeschleunigung (ay).

4.  Verfahren nach einem der vorherigen Ansprüche, **dadurch gekennzeichnet, dass** auch die Drehrate ($\omega_x$) mit einem zweiten Schwellwert zur Bildung der Auslöseentscheidung verglichen wird, der in Abhängigkeit von der integrierten Drehrate ($\omega_x$) und der integrierten Fahrzeugquerbeschleunigung (ay) eingestellt wird.

5.  Verfahren nach Anspruch 4, **dadurch gekennzeichnet, dass** der zweite Schwellwert in Abhängigkeit von einem Quotienten aus der integrierten Drehrate und der integrierten Fahrzeugquerbeschleunigung (ay) gebildet wird.

6.  Verfahren nach einem der Ansprüche 2-5, **dadurch gekennzeichnet, dass** bei der Bestimmung des Verhältnisses und/oder des Quotienten die integrierte Fahrzeugquerbeschleunigung (ay) von der Fahrzeugquergeschwindigkeit zu Beginn eines Seitenaufprallereignisses abgezogen wird.

## Claims

1.  Method for formation of an initiation decision, with the initiation decision being formed as a function of driving dynamic data (ay, $\omega_x$), with at least one vehicle lateral acceleration (ay) and one rotation rate ($\omega_x$) about the vehicle longitudinal axis being linked to one another as the driving dynamics data in order to form the initiation decision, **characterized in that** the vehicle lateral acceleration (ay) is additionally subject to a threshold-value decision in order to form the initiation decision, with the first threshold value being set at least as a function of an integrated vehicle lateral acceleration (ay) and of an integrated rotation rate ($\omega_x$).

2.  Method according to Claim 1, **characterized in that** the first threshold value is set as a function of a ratio of the integrated rotation rate ($\omega_x$) and the integrated vehicle lateral acceleration (ay).

3.  Method according to Claim 1 or 2, **characterized in that** the integrations start as a function of the vehicle lateral acceleration (ay), and the integrations end as a function of an integral value of the vehicle lateral acceleration (ay).

4.  Method according to one of the preceding claims, **characterized in that** the rotation rate ($\omega_x$) is also compared with a second threshold value in order to form the initiation decision, which second threshold value is set as a function of the integrated rotation rate ($\omega_x$) and the integrated vehicle lateral acceleration (ay).

5. Method according to Claim 4, **characterized in that** the second threshold value is formed as a function of the quotient of the integrated rotation rate and the integrated vehicle lateral acceleration (ay).

6. Method according to one of Claims 2-5, **characterized in that**, during the determination of the ratio and/or the quotient, the integrated vehicle lateral acceleration (ay) is subtracted from the vehicle lateral acceleration at the start of a side impact event.

**Revendications**

1. Procédé pour établir une décision de déclenchement, suivant lequel la décision de déclenchement est établie en fonction de données de dynamique de marche (ay, $\omega_x$), en combinant l'une avec l'autre au moins une accélération transversale du véhicule (ay) et une vitesse de rotation ($\omega_x$) autour de l'axe longitudinal du véhicule en tant que données de dynamique de marche afin d'établir la décision de déclenchement,
   **caractérisé en ce que**
   l'accélération transversale du véhicule (ay) est soumise en outre à une décision de valeur de seuil pour établir la décision de déclenchement, la première valeur de seuil étant ajustée au moins en fonction d'une accélération transversale du véhicule (ay) intégrée et d'une vitesse de rotation ($\omega_x$) intégrée.

2. Procédé selon la revendication 1,
   **caractérisé en ce que**
   la première valeur de seuil est ajustée en fonction d'un rapport de la vitesse de rotation ($\omega_x$) intégrée et de l'accélération transversale du véhicule (ay) intégrée.

3. Procédé selon la revendication 1 ou 2,
   **caractérisé en ce que**
   les intégrations commencent en fonction de l'accélération transversale du véhicule (ay), et les intégrations finissent en fonction d'une valeur intégrale de l'accélération transversale du véhicule.(ay).

4. Procédé selon l'une des revendications précédentes,
   **caractérisé en ce que**
   pour établir la décision de déclenchement, la vitesse de rotation ($\omega_x$) est elle aussi comparée à une seconde valeur de seuil ajustée en fonction de la vitesse de rotation ($\omega_x$) intégrée et de l'accélération transversale du véhicule (ay) intégrée.

5. Procédé selon la revendication 4,
   **caractérisé en ce que**
   la seconde valeur de seuil est formée en fonction d'un quotient obtenu à partir de la vitesse de rotation intégrée et de l'accélération transversale du véhicule intégrée (ay).

6. Procédé selon l'une des revendications 2 à 5,
   **caractérisé en ce que**
   lors de la détermination du rapport et/ou du quotient, l'accélération transversale du véhicule (ay) intégrée est soustraite de la vitesse transversale du véhicule au début d'un événement d'impact latéral.

Fig. 1

Fig. 2

30 ‿

F träge

$h_1$

31

33 ‿

F träge

$h_2$

32

# Fig. 3

g($S_{roll}$)
[willkürliche
Einheiten]

100 —

40

0 —

0

1

$S_{roll}$
[willkürliche
Einheiten]

# Fig. 4